# EUROPEAN PATENT APPLICATION

(11) **EP 3 636 963 A2**
(43) Date of publication of application: **15.04.2020**
(21) Application number: 19202822.3
(22) Date of filing: 11.10.2019
(51) Int. Cl.: F16H 57/04, F01M 11/04

(54) **LUBRICATING OIL DISCHARGE AND FILLING STRUCTURE**

(30) Priority: 11.10.2018 JP 2018192442
(71) Applicant: Roki Co., Ltd., Hamamatsu-shi, Shizuoka 431-3314 (JP)
(72) Inventor: ITOYA, Hiroki, HAMAMATSU-SHI, SHIZUOKA, 431-3314 (JP); SATO, Taisuke, HAMAMATSU-SHI, SHIZUOKA, 431-3314 (JP)
(74) Representative: Cabinet Beau de Loménie

(57) **Abstract**

A lubricating oil discharge and filling structure (10) of an oil pan (11) is provided, which is capable of saving space by adopting a uniaxial structure, and discharging and filling lubricating oil at one spot reliably and easily without varying a height of an overflow oil level and a height of a drain oil level. A cylindrical lubricating oil amount adjustment wall vertically provided from a bottom surface of the oil pan, and having a lubricating oil amount adjustment passage (14) communicating with an outside of the oil pan, formed on an inner periphery, is included, the lubricating oil amount adjustment wall has a lubricating oil discharge hole (15) formed in a lower part, to the lubricating oil amount adjustment passage, a cylindrical lubricating oil amount adjustment plug (20) in which a communication hole (21) that communicates with the lubricating oil amount adjustment passage is formed is assembled movably along the lubricating oil amount adjustment passage, the lubricating oil amount adjustment plug (20) includes a screw portion (22) that screws into a screw groove (16) formed in the lubricating oil amount adjustment passage, and a sealing wall (23) that seals discharge of the lubricating oil from the lubricating oil discharge hole, the lubricating oil discharge hole is closed by a drain plug (30) that is attachable and detachable, the lubricating oil amount adjustment passage (14), the lubricating oil amount adjustment plug (20) and the drain plug (30) are assembled coaxially, and the lubricating oil amount adjustment plug (20) is capable of abutting on an abutment portion (17) that is formed in the lubricating oil amount adjustment passage.

## Description

### BACKGROUND OF THE INVENTION

### Field of the Invention

The present invention relates to an oil pan that is mounted to a lower end of a mechanical device, and particularly relates to an oil pan having an adjustment mechanism that can adjust an enclosing amount of lubricating oil that is enclosed in an automatic transmission or the like.

### Description of the Related Art

Conventionally, lubricating oil has been enclosed in an automatic transmission of an automobile or the like that houses gears and the like for transmitting power for the purpose of realizing smooth driving of the gears and the like and cooling frictional heat that is generated by driving of the gears and the like.

In order to realize smooth driving of gears and the like, and keep performance of cooling of the frictional heat as above, it is necessary to exchange lubricating oil regularly, and keep the enclosing amount of the lubricating oil that is enclosed in an automatic transmission at a predetermined amount. Thus, there is known an oil pan in which such a mechanism is formed that can adjust an enclosing amount of lubricating oil that is enclosed in an automatic transmission of an automobile or the like.

The conventional enclosing amount adjustment mechanism of lubricating oil includes a lubricating oil discharge hole that is formed in a lowermost end of an oil pan and a lubricating oil amount adjustment hole that discharges a lubricating oil in a predetermined amount or more by a cylindrical lubricating oil amount adjustment cylinder respectively, in order to discharge an entire amount of the enclosed lubricating oil. At the time of lubricating oil exchange work, a bolt that closes the lubricating oil discharge hole is detached, and the entire amount of lubricating oil in the automatic transmission is discharged. After the lubricating oil discharge hole is closed, new lubricating oil is injected into the automatic transmission, and after the lubricating oil is injected until the lubricating oil injected from the lubricating oil amount adjustment hole overflows, the lubricating oil amount adjustment hole is closed with a bolt or the like to perform exchange work of the lubricating oil enclosed in the automatic transmission. By forming the lubricating oil amount adjustment cylinder in the oil pan in this way, it is possible to keep the enclosing amount of the lubricating oil which is enclosed in the automatic transmission at a predetermined amount or less, and it is possible to adjust an accurate enclosing amount.

However, according to the enclosed amount adjustment mechanism of lubricating oil as described above, there arises the problem that work is complicated because it is necessary to detach and attach the bolts that respectively close the lubricating oil discharge hole and the lubricating oil amount adjustment hole, and the problem that reduction in size of the oil pan, reduction in size of the automatic transmission by extension cannot be achieved because it is necessary to form the lubricating oil discharge hole and the lubricating oil amount adjustment hole in the oil pan.

Thus, an enclosing amount adjustment mechanism of lubricating oil of an oil pan described in U. S. Patent No. 6,886,608 has a lubricating oil filling collar in which a side hole is formed, and a tubular member having an upper end opened and having a side hole, and can discharge the lubricating oil filled in the oil pan by aligning the side hole of the lubricating oil filling collar and the side hole of the tubular member in a state where a bolt that closes a lower end of the lubricating oil filling collar is detached. After discharging the lubricating oil in the automatic transmission, the lubricating oil enclosing amount adjustment mechanism injects the lubricating oil in a state where the side hole of the lubricating oil filling collar is closed by rotating the tubular member in a circumferential direction in such a manner as to close the side hole of the lubricating oil filling collar with an outer circumferential surface of the tubular member, whereby the lubricating oil enclosing amount adjustment mechanism can discharge the lubricating oil in a predetermined amount or more that exceeds the upper end of the lubricating oil filling collar, and can adjust the enclosing amount. According to the enclosing amount adjustment mechanism of lubricating oil like this, the lubricating oil can be discharged and filled uniaxially, so that exchange work of the lubricating oil can be easily performed, and the oil pan can be reduced in size.

However, according to a configuration of the aforementioned conventional oil pan, the lubricating oil cannot be smoothly discharged unless the side hole of the lubricating oil filling collar and the side hole of the tubular member are reliably aligned with each other at the time of discharge of the lubricating oil, whereas the lubricating oil filling collar and the tubular member are internal structure components of the oil pan, so that it is impossible to confirm that the positions of the side holes are reliably aligned with each other visually, and there arises the problem that working efficiency is low.

### SUMMARY OF THE INVENTION

The present invention is made in the light of the above described problems, and has an object to provide a lubricating oil discharge and filling structure of an oil pan that can achieve space saving by adopting an uniaxial structure, and can discharge and fill lubricating oil in one spot reliably and easily without varying a height of an overflow oil level and a height of a drain oil level.

A lubricating oil discharge and filling structure according to the present invention is a lubricating oil discharge and filling structure capable of discharging lubricating oil that is enclosed into an oil pan, and adjusting an enclosing amount, including a cylindrical lubricating oil amount adjustment wall that is vertically provided from a bottom surface of the oil pan, and has a lubricating oil amount adjustment passage that communicates with an outside of the oil pan, formed on an inner periphery, wherein the lubricating oil amount adjustment wall has a lubricating oil discharge hole formed in a lower part, to the lubricating oil amount adjustment passage, a cylindrical lubricating oil amount adjustment plug in which a communication hole that communicates with the lubricating oil amount adjustment passage is formed is assembled movably along the lubricating oil amount adjustment passage, the lubricating oil amount adjustment plug includes a screw portion that screws into a screw groove formed in the lubricating oil amount adjustment passage, and a sealing wall that seals discharge of the lubricating oil from the lubricating oil discharge hole, the lubricating oil discharge hole is closed by a drain plug that is detachable and attachable, the lubricating oil amount adjustment passage, the lubricating oil amount adjustment plug and the drain plug are assembled coaxially, and the lubricating oil amount adjustment plug is capable of abutting on an abutment portion that is formed in the lubricating oil amount adjustment passage.

The lubricating oil discharge and filling structure according to the present invention, may include a falling-off prevention device that prevents screwing of the screw portion and the screw groove from being released when the lubricating oil amount adjustment plug is moved, in at least either one of the lubricating oil amount adjustment passage and the lubricating oil amount adjustment plug.

In the lubricating oil discharge and filling structure according to the present invention, the falling-off prevention device may be assembled to an upper end of the lubricating oil amount adjustment wall, and include a stopper portion that protrudes to the lubricating oil amount adjustment plug.

In the lubricating oil discharge and filling structure according to the present invention, the falling-off prevention device may be provided extensively from a lower end of the lubricating oil amount adjustment plug, and include a stopper portion capable of abutting on an abutment surface that is formed in the lubricating oil amount adjustment passage.

In the lubricating oil discharge and filling structure according to the present invention, the lubricating oil amount adjustment plug may screw onto an engagement member that is inserted into the lubricating oil amount adjustment passage, and the engagement member may have the screw groove that is formed on an outer periphery, and an abutment portion on which the lubricating oil amount adjustment plug abuts.

In the lubricating oil discharge and filling structure according to the present invention, a second lubricating oil discharge hole that is closed by the sealing wall may beformed in an outer circumferential surface of the engagement member.

In the lubricating oil discharge and filling structure according to the present invention, the drain plug may include a seal member that abuts on an inner wall of the lubricating oil amount adjustment passage, and a screwing portion that screws onto an outer wall of the lubricating oil amount adjustment passage.

In the lubricating oil discharge and filling structure according to the present invention, the drain plug may include a loosening prevention mechanism that is engageable with the oil pan.

In the lubricating oil discharge and filling structure according to the present invention, the seal member and the screwing portion may be superimposed in a radial direction of the lubricating oil amount adjustment passage.

The summary of the above described invention does not enumerate all of necessary characteristics of the present invention, but a sub combination of the characteristic groups may also be the invention.

The lubricating oil discharge and filling structure according to the present invention includes the configuration in which the lubricating oil amount adjustment wall has a lubricating oil discharge hole formed in a lower part, to the lubricating oil amount adjustment passage, a cylindrical lubricating oil amount adjustment plug in which a communication hole that communicates with the lubricating oil amount adjustment passage is formed is assembled movably along the lubricating oil amount adjustment passage, the lubricating oil amount adjustment plug includes a screw portion that screws into a screw groove formed in the lubricating oil amount adjustment passage, and a sealing wall that seals discharge of the lubricating oil from the lubricating oil discharge hole, the lubricating oil discharge hole is closed by a drain plug that is detachable and attachable, the lubricating oil amount adjustment passage, the lubricating oil amount adjustment plug and the drain plug are assembled coaxially, and the lubricating oil amount adjustment plug is capable of abutting on an abutment portion that is formed in the lubricating oil amount adjustment passage. Consequently, the lubricating oil discharge and filling structure secures precision of adjustment of the drain oil level and the overflow oil level by making heights of the drain oil level and the overflow oil level constant, and can reliably discharge lubricating oil by only moving the lubricating oil amount adjustment plug along the lubricating oil amount adjustment passage without aligning side holes with each other.

### BRIEF DESCRIPTION OF THE DRAWINGS

FIG. 1 is a sectional view for explaining a configuration of a lubricating oil discharge and filling structure according to a first embodiment of the present invention;
FIG. 2 is a partial sectional view for explaining the configuration of the lubricating oil discharge and filling structure according to the first embodiment of the present invention;
FIG. 3 is a sectional view for explaining a configuration at a time of oil discharge of the lubricating oil discharge and filling structure according to the first embodiment of the present invention;
FIG. 4 is a sectional view for explaining a configuration at a time of filling of the lubricating oil discharge and filling structure according to the first embodiment of the present invention;
FIG. 5 is a sectional view for explaining a configuration of a falling-off prevention device of the lubricating oil discharge and filing structure according to the first embodiment of the present invention;
FIG. 6 is a sectional view for explaining another configuration of the falling-off prevention device of the lubricating oil discharge and filling structure according to the first embodiment of the present invention;
FIG. 7 is a perspective view showing a lubricating oil discharge and filling structure according to a second embodiment of the present invention; and
FIG. 8 is a sectional view taken along line A-A in FIG. 7.

### DETAILED DESCRIPTION OF THE PREFERRED EMBODIMENTS

Hereinafter, preferred embodiments for carrying out the present invention will be described with use of the drawings. Note that the following embodiments do not intend to limit the invention according to the respective claims, and all combinations of characteristics described in the embodiments are not always essential to the solution of the invention.

### [First Embodiment]XXX

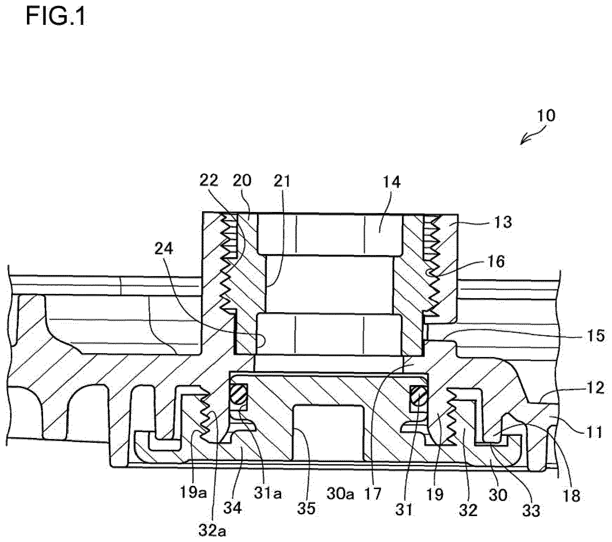

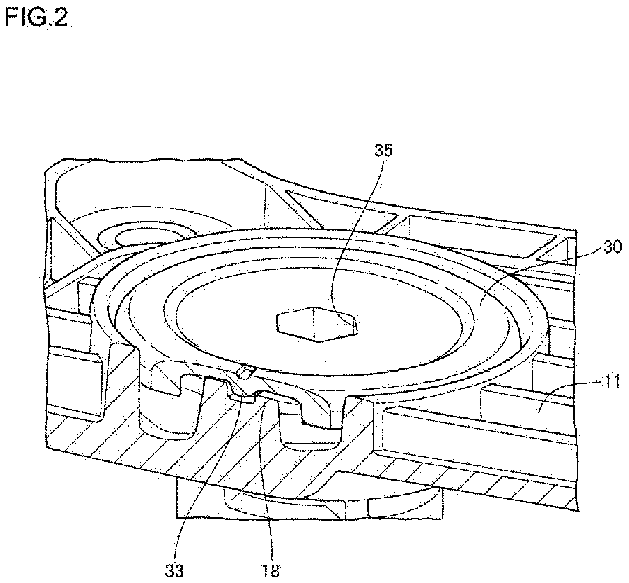

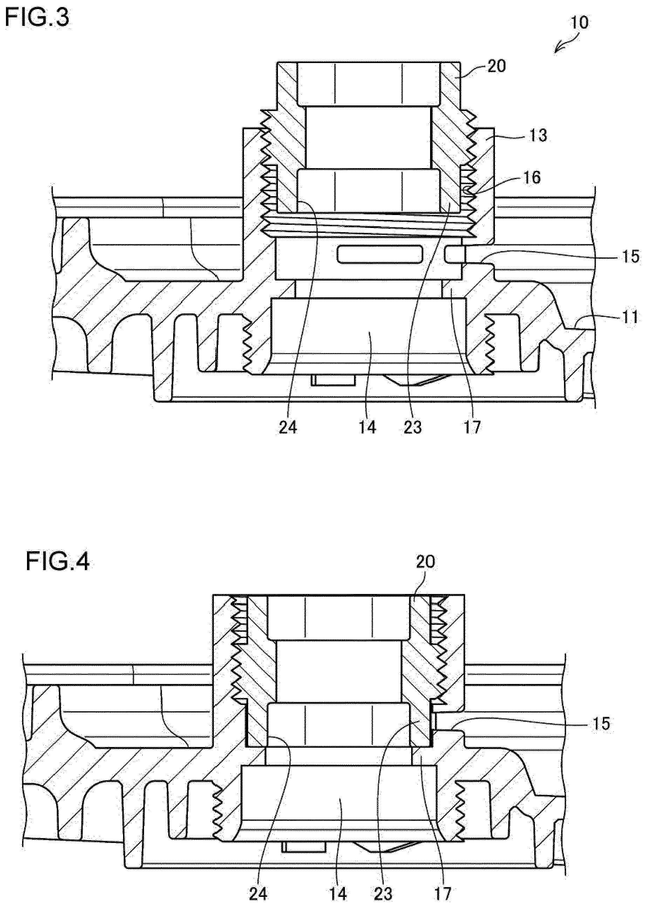

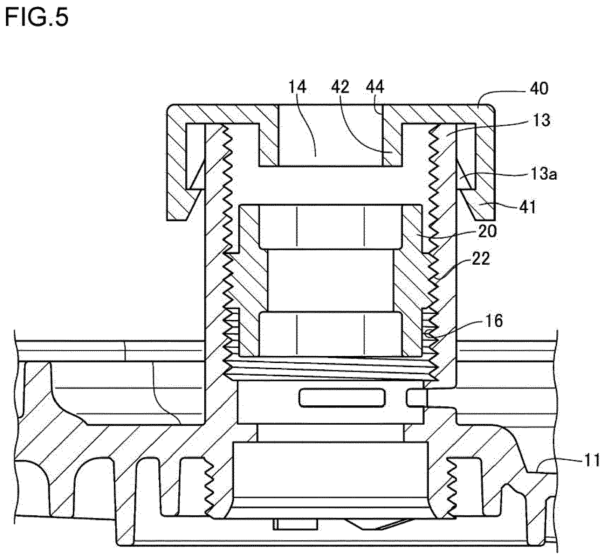

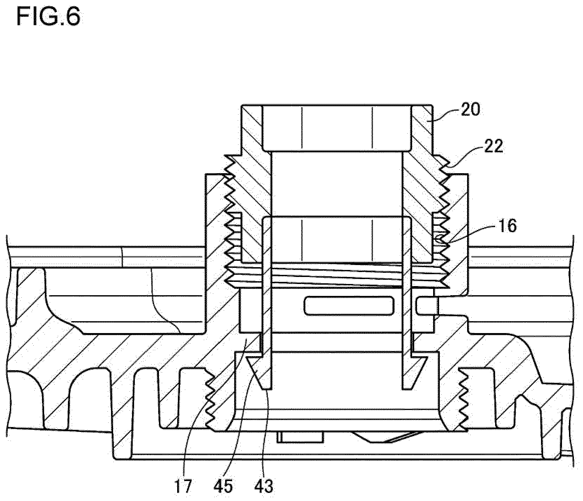

FIG. 1 is a sectional view for explaining a configuration of a lubricating oil discharge and filling structure according to a first embodiment of the present invention. FIG. 2 is a partial sectional view for explaining the configuration of the lubricating oil discharge and filling structure according to the first embodiment of the present invention. FIG. 3 is a sectional view for explaining a configuration at a time of oil discharge of the lubricating oil discharge and filling structure according to the first embodiment of the present invention. FIG. 4 is a sectional view for explaining a configuration at a time of filling of the lubricating oil discharge and filling structure according to the first embodiment of the present invention. FIG. 5 is a sectional view for explaining a configuration of a falling-off prevention device of the lubricating oil discharge and filing structure according to the first embodiment of the present invention. FIG. 6 is a sectional view for explaining another configuration of the falling-off prevention device of the lubricating oil discharge and filling structure according to the first embodiment of the present invention.

As illustrated in FIG. 1, a lubricating oil discharge and filling structure 10 according to the present embodiment is formed in an oil pan 11 that is mounted under an automatic transmission of an automobile or the like to enclose lubricating oil into the automatic transmission. The oil pan 11 is formed from a synthetic resin, and is preferably formed from a thermoplastic synthetic resin such as a polyamide resin and a polypropylene resin, for example.

The lubricating oil discharge and filling structure 10 according to the present embodiment has a lubricating oil amount adjustment wall 13 that is vertically provided from a bottom surface 12 of the oil pan 11, a lubricating oil amount adjustment plug 20 that is assembled to be movable along a lubricating oil amount adjustment passage 14 formed in the lubricating oil amount adjustment wall 13, a drain plug 30 that is detachably assembled to a lower end of the lubricating oil amount adjustment passage 14. Note that the lubricating oil amount adjustment passage 14, the lubricating oil amount adjustment plug 20 and the drain plug 30 are disposed on a same axis.

The lubricating oil amount adjustment wall 13 is vertically provided from the bottom surface 12 of the oil pan 11, and is formed as a cylindrical portion in which the lubricating oil amount adjustment passage 14 which communicates with an outside of the oil pan 11 is formed on an inner periphery. A lubricating oil discharge hole 15 that communicates with the lubricating oil amount adjustment passage 14 is formed in a side surface at a lower part of the lubricating oil amount adjustment wall 13. Further, on an inner circumferential surface of the lubricating oil amount adjustment passage 14, a screw groove 16 in which the lubricating oil amount adjustment plug 20 is screwed is formed along an axial direction. Further, an abutment portion 17 that protrudes to an inner circumferential side is formed under the lubricating oil discharge hole 15 of the lubricating oil amount adjustment passage 14.

On an undersurface of the oil pan 11, an extension portion 19 that is formed by hanging down to extend the lubricating oil amount adjustment passage 14 in the lubricating oil amount adjustment wall 13 is formed. In this way, the lubricating oil amount adjustment passage 14 is configured by an inner periphery of the lubricating oil amount adjustment wall 13, and an inner periphery of the extension portion 19. Note that on an outer wall of the extension portion 19, a screwed portion 19a on which the drain plug 30 is screwed is formed. Further, on an undersurface of the oil pan 11, an annular protruded portion 18 that is formed concentrically with the extension portion 19 is formed by hanging down similarly to the extension portion 19, and is formed to be engageable with a loosening prevention mechanism 33 of the drain plug 30 that will be described later.

The lubricating oil amount adjustment plug 20 is a cylindrical member in which a communication hole 21 that communicates with the lubricating oil amount adjustment passage 14 is formed, and is formed from a synthetic resin similarly to the oil pan 11.

Further, in the lubricating oil amount adjustment plug 20, a screw portion 22 that is screwed into the screw groove 16 that is formed on the inner periphery of the lubricating oil amount adjustment passage 14 is formed on an outer circumferential surface, and a sealing wall 23 that is provided extensively from a lower end of the screw portion 22 is formed. Further, at both vertical ends of the communication hole 21, an operation portion 24 is formed, which enables the lubricating oil amount adjustment plug 20 to move along the lubricating oil amount adjustment passage 14 along the screw groove 16 by inserting a tool such as a hexagonal wrench and rotating the lubricating oil amount adjustment plug 20.

Note that a lower end of the sealing wall 23 abuts on the abutment portion 17 in a state where the lubricating oil amount adjustment plug 20 is moved to a lowermost end. At this time, the abutment portion 17 and the sealing wall 23 are both formed from a synthetic resin, and therefore seal the lubricating oil that flows out from the lubricating oil discharge hole 15 by an elastic force of the synthetic resin.

The drain plug 30 includes a drain plug main body 30a that is inserted into the extension portion 19 and closes the lower end of the lubricating oil amount adjustment passage 14, and a base portion 34 that extends in a radial direction from a lower end of the drain plug main body 30a. The drain plug main body 30a is formed into a columnar shape, and a ring groove 31a to which a seal member 31 is assembled is formed in an upper part. The seal member 31 seals the lubricating oil that passes through the lubricating oil amount adjustment passage 14 by abutting on an inner wall surface of the extension portion 19. Further, in an undersurface of the drain plug main body 30a, a hexagonal working hole 35 is formed, so that attaching and detaching work of the drain plug 30 can be performed by inserting a tool such as a hexagonal wrench into the working hole 35.

The base portion 34 is formed into a disk shape extending in the radial direction from the lower end of the drain plug main body 30a as described above, and includes an annular rib 32 in which a screwing portion 32a that screws onto the screwed portion 19a that is formed on the outer wall of the extension portion 19 is formed on an inner circumferential surface, and a loosening prevention mechanism 33 that is engageable with the protruded portion 18 that is formed on the undersurface of the oil pan 11.

The loosening prevention mechanism 33 has a configuration in a protruded shape protruding from the base portion 34, and as illustrated in FIG. 2, when the drain plug 30 is assembled to the oil pan 11 by inserting a tool into the working hole 35, the configuration in the protruded shape rides over the protruded portion 18 and the drain plug 30 is assembled, so that the drain plug 30 is configured not to rotate in a direction in which the drain plug 30 is loosened because the configuration in the protruded shape and the protruded portion 18 abut on each other, even when vibration or the like is applied.

Further, in the drain plug 30, the seal member 31 and the screwing portion 32a are disposed concentrically, and are superimposed in the radial direction of the lubricating oil amount adjustment passage 14. By being configured in this way, it is possible to flatten the drain plug 30, and it is possible to reduce the size of the lubricating oil discharge and filling structure 10.

Next, an operation of the lubricating oil discharge and filling structure 10 according to the present embodiment will be described. As illustrated in FIG. 3, when the lubricating oil in the oil pan 11 is discharged, the drain plug 30 is detached, and a tool is inserted into the operation portion 24 of the lubricating oil amount adjustment plug 20 from below the lubricating oil amount adjustment passage 14 to rotate the lubricating oil amount adjustment plug 20. At this time, the lubricating oil amount adjustment plug 20 is screwed into the screw groove 16, and therefore is movable in the vertical direction with rotation, so that the lubricating oil amount adjustment plug 20 is moved upward of the lubricating oil amount adjustment passage 14 by rotating the lubricating oil amount adjustment plug 20.

When the lubricating oil amount adjustment plug 20 moves upward of the lubricating oil amount adjustment passage 14, and abutment on the abutment portion 17 is released, closure of the lubricating oil discharge hole 15 by the sealing wall 23, and seal of the abutment portion 17 and the sealing wall 23 is released, and the inside of the oil pan 11 and the lubricating oil amount adjustment passage 14 communicate with each other via the lubricating oil discharge hole 15, so that the lubricating oil in the oil pan 11 is discharged from the lubricating oil amount adjustment passage 14.

Next, when a predetermined amount of the lubricating oil is filled, as illustrated in FIG. 4, the lubricating oil amount adjustment plug 20 is moved downward to close the lubricating oil discharge hole 15 by the sealing wall 23, and the lower end of the sealing wall 23 is caused to abut on the abutment portion 17, whereby the lubricating oil amount adjustment passage 14 can close the lubricating oil discharge hole 15 while keeping a state of communicating with the outside of the oil pan 11 via the communication hole 21. When new lubricating oil is injected into the automatic transmission in this state, the lubricating oil which is injected to a height of the lubricating oil amount adjustment wall 13 or more is discharged to the outside from the lubricating oil amount adjustment passage 14. Accordingly, when the new lubricating oil is injected into the automatic transmission until the lubricating oil is discharged from the lubricating oil amount adjustment passage 14, the lubricating oil in a desired enclosing amount is injected into the automatic transmission, and adjustment of an accurate enclosing amount can be performed.

Here, the lubricating oil amount adjustment wall 13 is provided vertically from the bottom surface 12 of the oil pan 11 and fixed, so that the height does not change, and a desired enclosing amount can always be specified to be constant.

The drain plug 30 is assembled to the screwed portion 19a after adjustment of an accurate enclosing amount of the lubricating oil is performed, whereby the lubricating oil amount adjustment passage 14 and the communication hole 21 are closed, and the lubricating oil in the desired enclosing amount can be enclosed into the automatic transmission.

The lubricating oil discharge and filling structure 10 according to the present embodiment preferably includes a falling-off prevention device that prevents release of screwing of the screw groove 16 which is formed in the lubricating oil amount adjustment passage 14 and the screw portion 22 which is formed in the lubricating oil amount adjustment plug 20 when the lubricating oil amount adjustment plug 20 is moved along the lubricating oil amount adjustment passage 14.

As illustrated in FIG. 5, the falling-off prevention device is preferably configured as a cap member 40 that is mounted on the upper end of the lubricating oil amount adjustment wall 13, and the cap member 40 preferably includes an external fitting portion 41 that engages with an engagement projection 13a that is formed on an outer circumferential surface of the lubricating oil amount adjustment wall 13, and a stopper member 42 that is inserted through the lubricating oil amount adjustment passage 14 and protrudes toward the lubricating oil amount adjustment plug 20.

By being configured in this way, the lubricating oil amount adjustment plug 20 abuts on the stopper member 42 when moving upward, and thereby screwing of the screw groove 16 and the screw portion 22 can be prevented from being released. Note that the cap member 40 has an opening 44 formed in a central portion, and therefore the lubricating oil in the oil pan 11 can be discharged from the lubricating oil amount adjustment passage 14 via the opening.

Further, as another example of the falling-off prevention device, as illustrated in FIG. 6, a stopper 43 that extends by hanging downward from the lubricating oil amount adjustment plug 20 can also be formed. A step engagement portion 45 is formed at an outer part of the stopper 43, and when the lubricating oil amount adjustment plug 20 moves upward, the step engagement portion 45 abuts on an undersurface of the abutment portion 17, and thereby can prevent screwing of the screw groove 16 and the screw portion 22 from being released.

The lubricating oil discharge and filling structure according to the present embodiment configured in this way includes the configuration in which the lubricating oil discharge hole 15 is formed in the lower part of the lubricating oil amount adjustment wall 13, the cylindrical lubricating oil amount adjustment plug 20 in which the communication hole 21 that communicates with the lubricating oil amount adjustment passage 14 is formed is assembled to the lubricating oil amount adjustment passage 14 to be movable along the lubricating oil amount adjustment passage 14, the lubricating oil amount adjustment plug 20 includes the screw portion 22 that is screwed into the screw groove 16 which is formed on the inner periphery of the lubricating oil amount adjustment passage 14, and the sealing wall 23 that closes the lubricating oil discharge hole 15, the lubricating oil amount adjustment passage 14, the lubricating oil amount adjustment plug 20 and the drain plug 30 are assembled coaxially, and the lubricating oil amount adjustment plug 20 is capable of abutting on the abutment portion 17 which is formed in the lubricating oil amount adjustment passage 14. Accordingly, the lubricating oil discharge and filling structure can secure precision of adjustment of oil levels of the drain oil level and the overflow oil level by keeping the drain oil level and the overflow oil level constant, and perform discharge of the lubricating oil reliably by only moving the lubricating oil amount adjustment plug 20 along the lubricating oil amount adjustment passage 14 without aligning the side holes with each other.

### [Second Embodiment]

In the lubricating oil discharge and filling structure 10 according to the first embodiment described above, explanation is made about the case where the lubricating oil amount adjustment plug 20 is screwed into the screw groove 16 which is formed on the inner circumferential surface of the lubricating oil amount adjustment passage 14, and the lubricating oil amount adjustment plug 20 is mounted movably along the lubricating oil amount adjustment passage 14. In a lubricating oil discharge and filling structure 10' of a second embodiment that will be described next, explanation is made about an example of a lubricating oil amount adjustment plug 53 having a mode different from the first embodiment. Note that same or similar members as or to those in the case of the aforementioned first embodiment will be assigned with the same reference signs and explanation thereof will be omitted.

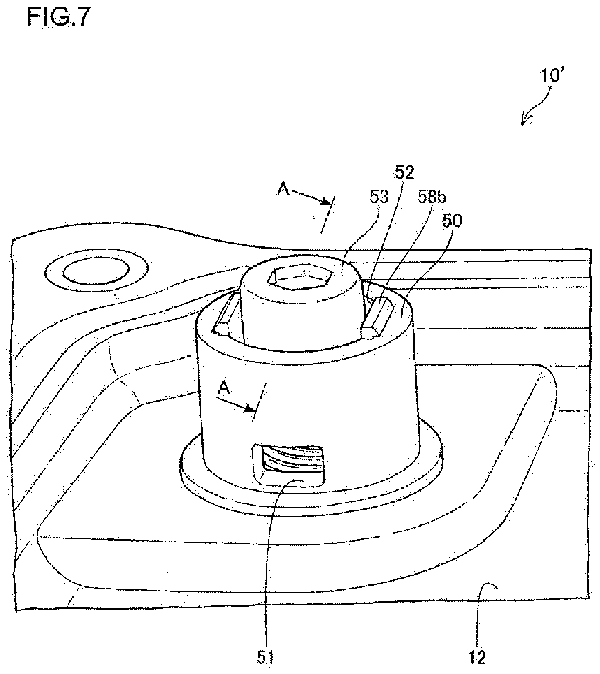

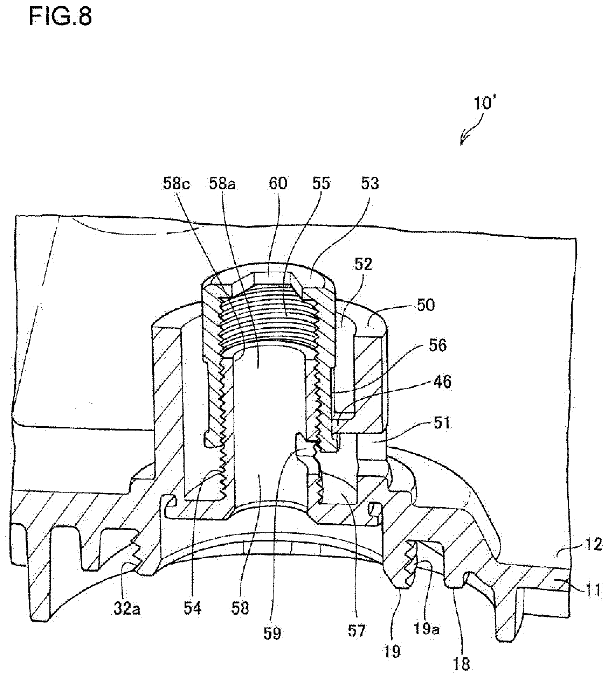

FIG. 7 is a perspective view showing the lubricating oil discharge and filling structure according to the second embodiment of the present invention, and FIG. 8 is a sectional view taken along line A-A in FIG. 7.

As illustrated in FIG. 7, in the lubricating oil discharge and filling structure 10' according to the present embodiment, the lubricating oil amount adjustment plug 53 vertically provided from the bottom surface 12, but is not directly screwed in an inner circumferential surface of the lubricating oil amount adjustment wall 50 in which a lubricating oil discharge hole 51 is formed, and is screwed onto an engagement member 58 that is inserted into the lubricating oil amount adjustment passage 52 and is fixed.

As illustrated in FIG. 8, the engagement member 58 includes a cylindrical engagement member main body 58a in which a screw groove 54 is formed on an outer circumferential surface, and a through-hole 58c that communicates with a lubricating oil amount adjustment passage 52 is formed on an inner circumferential portion, and an abutment portion 57 that extends in a radial direction from a lower end of the engagement member main body 58a. A second lubricating oil discharge hole 59 is formed in a lower part of the engagement member main body 58a. Further, in the abutment portion 57, a pair of engagement claws 58b that are vertically provided along the lubricating oil amount adjustment passage 52 are formed, and the engagement claws 58b engage with an upper end of the lubricating oil amount adjustment wall 50, and thereby fix the engagement member 58 into the lubricating oil amount adjustment passage 52. An upper end surface of the engagement member main body 58a is formed to be lower than an upper end surface of the lubricating oil amount adjustment wall 50, and a top surface of the lubricating oil amount adjustment plug 53 is configured to be at a same position as a top surface of the lubricating oil amount adjustment wall 50 or at a lower side than the top surface of the lubricating oil amount adjustment wall 50 when the lubricating oil amount adjustment plug 53 is moved downward as described later, so that securement of the drain oil level by the lubricating oil amount adjustment wall 50 is not influenced. Further, a stopper 46 that protrudes toward the lubricating oil amount adjustment plug 53 from the inner circumferential surface of the lubricating oil amount adjustment wall 50 may be formed. In this case, the stopper can function as a falling-off prevention device that prevents the lubricating oil amount adjustment plug 53 from falling off from the engagement member 58 when the lubricating oil amount adjustment plug 53 is moved upward, by abutting on a flange portion that is formed at the lubricating oil amount adjustment plug 53.

In the lubricating oil amount adjustment plug 53, a screw portion 55 is formed on an inner periphery, and an operation portion 60 in a hexagonal hole shape is formed at an upper end. Further, a sealing wall 56 is formed to extend downward from the screw portion 55. The lubricating oil amount adjustment plug 53 is configured to be rotatable by inserting a tool into the operation portion 60 from a lower end of the lubricating oil amount adjustment passage 52, and the lubricating oil amount adjustment plug 53 is disposed movably in the lubricating oil amount adjustment passage 52 by the rotation.

Next, an operation of the lubricating oil discharge and filling structure 10' according to the present invention will be described. As illustrated in FIG. 8, when the lubricating oil in the oil pan 11 is discharged, the drain plug 30 is detached, and the lubricating oil amount adjustment plug 53 is rotated by inserting a tool into the operation portion 60 of the lubricating oil amount adjustment plug 53 from below the lubricating oil amount adjustment passage 52. At this time, the lubricating oil amount adjustment plug 53 is movable in the vertical direction with rotation because the lubricating oil amount adjustment plug 53 is screwed onto the screw groove 54. Therefore, the lubricating oil amount adjustment plug 53 is moved upward of the lubricating oil amount adjustment passage 52 by being rotated.

When the lubricating oil amount adjustment plug 53 moves upward of the lubricating oil amount adjustment passage 52, the lubricating oil amount adjustment plug 53 releases closure of a second lubricating oil discharge hole 59. As a result, the inside of the oil pan 11 and the lubricating oil amount adjustment passage 52 communicate with each other via the lubricating oil discharge hole 51 and the second lubricating oil discharge hole 59, and therefore the lubricating oil in the oil pan 11 is discharged from the lubricating oil amount adjustment passage 52.

Next, when a predetermined amount of lubricating oil is filled, the lubricating oil amount adjustment plug 53 is moved downward, the second lubricating oil discharge hole 59 is closed by the sealing wall 56 and the lower end of the sealing wall 56 is caused to abut on the abutment portion 57. Thereby, the lubricating oil amount adjustment passage 52 can shut off a flow path that passes through the second lubricating oil discharge hole 59 and the lubricating oil discharge hole 51 while keeping a state of communicating with the outside of the oil pan 11 via the through-hole of the engagement member main body 58a. When new lubricating oil is injected into the automatic transmission in this state, the lubricating oil that is injected to a height of the lubricating oil amount adjustment wall 50 or more is discharged to outside from the lubricating oil amount adjustment passage 52. Accordingly, when new lubricating oil is injected into the automatic transmission until the lubricating oil is discharged from the lubricating oil amount adjustment passage 52, a desired enclosing amount of the lubricating oil is injected into the automatic transmission, and adjustment of the accurate enclosing amount can be performed.

Here, since the lubricating oil amount adjustment wall 50 is vertically provided from the bottom surface 12 of the oil pan 11 and is fixed, and the upper end surface of the engagement member 58 is disposed to be lower than the upper end surface of the lubricating oil amount adjustment wall 50, the height does not change, and a desired enclosing amount can always be specified to be constant.

The drain plug 30 is assembled to the screwed portion 19a after adjustment of the accurate enclosing amount of the lubricating oil is performed, whereby the lubricating oil amount adjustment passage 52 and the through-hole 58c are closed, and a desired enclosing amount of lubricating oil can be enclosed into the automatic transmission.

Note that for the lubricating oil discharge and filling structures 10 and 10' according to the aforementioned present embodiment, explanation is made about the case where the working hole 35 which is formed in the drain plug 30 and the operation portions 24 and 60 which are formed in the lubricating oil amount adjustment plugs 20 and 53 are in hexagonal shapes in which a hexagonal wrench is insertable, but these components may be formed in any shape as long as the components are capable of rotating the drain plug 30, and the lubricating oil amount adjustment plugs 20 and 53. It is obvious from the description of the claims that modes to which such a change or an alteration is added can also be included in the technical range of the present invention.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

The entire disclosure of Japanese Patent Application No. 2018-192442 filed on October 11, 2018 including the specification, claims, drawings and summary is incorporated herein by reference in its entirety.

### Reference Signs List

- 10, 10': Lubricating oil discharge and filling structure
- 11: Oil pan
- 12: Bottom surface
- 13, 50: Lubricating oil amount adjustment wall
- 14, 52: Lubricating oil amount adjustment passage
- 15, 51: Lubricating oil discharge hole
- 16, 54: Screw groove
- 17, 57: Abutment portion
- 18: Protruded portion
- 19: Extension portion
- 19a: Screwed portion
- 20, 53: Lubricating oil amount adjustment plug
- 21: Communication hole
- 22, 55: Screw portion
- 23, 56: Sealing wall
- 24, 60: Operation portion
- 30: Drain plug
- 30a: Drain plug main body
- 31: Seal member
- 32: Annular rib
- 32a: Screwing portion
- 33: Loosening prevention mechanism
- 34: Base portion
- 35: Working hole
- 40: Cap member
- 41: External fitting portion
- 42: Stopper member
- 43: Stopper
- 44: Opening
- 45: Step engagement portion
- 58: Engagement member
- 58a: Engagement member main body
- 58b: Engagement claw
- 59: Second lubricating oil discharge hole

## Claims

1. A lubricating oil discharge and filling structure (10, 10') capable of discharging lubricating oil that is enclosed into an oil pan (11), and adjusting an enclosing amount, comprising:
a cylindrical lubricating oil amount adjustment wall (13, 50) that is vertically provided from a bottom surface (12) of the oil pan (11), and has a lubricating oil amount adjustment passage (14, 52) that communicates with an outside of the oil pan, formed on an inner periphery,
wherein the lubricating oil amount adjustment wall (13, 50) has a lubricating oil discharge hole (15, 51) formed in a lower part,
to the lubricating oil amount adjustment passage (14, 52), a cylindrical lubricating oil amount adjustment plug (20, 53) in which a communication hole (21) that communicates with the lubricating oil amount adjustment passage (14, 52) is formed is assembled movably along the lubricating oil amount adjustment passage,
the lubricating oil amount adjustment plug (20, 53) includes a screw portion (22, 55) that screws into a screw groove (16, 54) formed in the lubricating oil amount adjustment passage, and a sealing wall (23, 56) that seals discharge of the lubricating oil from the lubricating oil discharge hole,
the lubricating oil discharge hole (15, 51) is closed by a drain plug 30 that is attachable and detachable,
or the lubricating oil amount adjustment passage (14, 52), the lubricating oil amount adjustment plug (20, 53) and the drain plug (30) are assembled coaxially, and
the lubricating oil amount adjustment plug (20, 53) is capable of abutting on an abutment portion (17, 57) that is formed in the lubricating oil amount adjustment passage (14, 52) .

2. The lubricating oil discharge and filling structure according to claim 1, comprising:
a falling-off prevention device (40, 46) that prevents screwing of the screw portion (22, 55) and the screw groove (16, 54) from being released when the lubricating oil amount adjustment plug (20, 53) is moved, in at least either one of the lubricating oil amount adjustment passage (14, 52) or the lubricating oil amount adjustment plug (20, 53).

3. The lubricating oil discharge and filling structure according to claim 2,
wherein the falling-off prevention device (40) is assembled to an upper end of the lubricating oil amount adjustment wall (13), and includes a stopper portion (42) that protrudes to the lubricating oil amount adjustment plug (20).

4. The lubricating oil discharge and filling structure according to claim 2,
wherein the falling-off prevention device (43) is provided extensively from a lower end of the lubricating oil amount adjustment plug (20), and includes a stopper portion (45) capable of abutting on an abutment surface that is formed in the lubricating oil amount adjustment passage (14).

5. The lubricating oil discharge and filling structure according to claim 1,
wherein the lubricating oil amount adjustment plug (53) screws onto an engagement member (58) that is inserted into the lubricating oil amount adjustment passage (52), and
the engagement member (58) has the screw groove (54) that is formed on an outer periphery, and an abutment portion (57) on which the lubricating oil amount adjustment plug (53) abuts.

6. The lubricating oil discharge and filling structure according to claim 5,
wherein a second lubricating oil discharge hole (59) that is closed by the sealing wall is formed in an outer circumferential surface (58a) of the engagement member (58).

7. The lubricating oil discharge and filling structure according to any one of claims 1 to 6,
wherein the drain plug (30) includes a seal member (31) that abuts on an inner wall (17) of the lubricating oil amount adjustment passage (14), and a screwing portion (32a) that screws onto an outer wall of the lubricating oil amount adjustment passage.

8. The lubricating oil discharge and filling structure according to claim 7,
wherein the drain plug (30) includes a loosening prevention mechanism (33) that is engageable with the oil pan (11) .

9. The lubricating oil discharge and filling structure according to claim 7 or 8,
wherein the seal member (31) and the screwing portion (32a) are superimposed in a radial direction of the lubricating oil amount adjustment passage (14).
